# EUROPEAN PATENT SPECIFICATION

(11) **EP 3 843 592 B1**
(45) Date of publication and mention of the grant of the patent: **17.08.2022**
(21) Application number: 19779590.9
(22) Date of filing: 30.08.2019
(51) Int. Cl.: A47J 31/46, A47J 31/00

(54) **METHOD AND APPARATUS FOR PREPARING A BEVERAGE**
VERFAHREN UND VORRICHTUNG ZUR ZUBEREITUNG EINES GETRÄNKS
PROCÉDÉ ET APPAREIL POUR PRÉPARER UNE BOISSON

(30) Priority: 30.08.2018 IT 201800008259
(43) Date of publication of application: 07.07.2021
(73) Proprietor: CMA MACCHINE PER CAFFE' S.r.l., 31058 Susegana (TV) (IT)
(72) Inventor: ZONELLI, Andrea, 31058 Susegana (TV) (IT)
(74) Representative: Gislon, Gabriele
(86) International application number: PCT/IB2019/057313
(87) International publication number: WO 2020/044295

(56) References cited:
- WO-A1-2015/055342
- GB-A- 2 139 481
- US-A- 5 813 318

## Description

### Field of the invention

The present invention concerns the field of beverage preparations, and especially coffee, by means of infusion machines or apparatuses.

In the present application, the term "infusion" refers to a machine or apparatus that allows to produce a beverage, and especially coffee, by means of the passage of a liquid (e.g. water), preferably hot and pressurized, through at least one powder ingredient, especially coffee, which is contained in an infusion chamber.

### Known prior art

In particular, apparatuses equipped with an infusion chamber (also known in the art as unit or infusion assembly) containing a basic substance or ingredient, typically powdered (such as powdered coffee for example), for preparing a beverage, such as espresso coffee for example, are known. This substance can be arranged directly into the infusion chamber, or can be contained within a container, typically in the form of a capsule, pod or similar element.

The apparatus further has a pump and a hydraulic circuit to supply a pressurized liquid to the infusion chamber (typically water) for preparing a beverage.

It is also known to divide the preparation and delivery of a beverage into two steps. In particular, it is known to provide a first pre-infusion step of a beverage, in which the heated and pressurized liquid is put in contact with the basic substance inside the infusion chamber, without delivering the beverage from the chamber itself, and a second step in which the real and actual delivery of the beverage occurs.

The two steps are typically carried out at least with different pressures of the liquid injected inside the infusion chamber. Thus, systems equipped with variable flow rate and/or pressure pumps, or machines equipped with at least partly different hydraulic ducts to supply liquids with different pressures to the infusion chamber are known. Specific control systems are prearranged to control the various elements of the apparatuses so that to ensure the proper execution of the various beverage preparing and delivering operations.

GB 2139481A describes an apparatus for preparing hot coffee beverages according to the preamble of independent claim 1. Said known apparatus has an hydraulic circuit where the inflow of cold water (A) from the water-supply system divides in two branches: the first branch intended for preparing an espresso coffee and comprising a pressure pump and a second branch bypassing the pump and intended for preparing a normal coffee. A heating unit is arranged just upstream of the infusion assembly. For preparing a normal coffee only the pressure of the water-supply system through the by-pass of the pump is exploited, for preparing an espresso coffee the pump is operated, thus increasing the pressure. The measurement of the delivered water volume and the heating of the water occur, for both modes, by an element controlling the flow and a heating unit in a shared length downstream of the two branches described above and upstream of the inflow valve leading to the delivery unit.

WO 2015/055342 describes an apparatus for hot coffee beverages which provides only one circuit whose main components are a pre-heating boiler upstream of an hydraulic pump, a delivery unit provided with a sensor 4 for controlling the temperature, a resistance heater arranged on the infusion assembly and means for weighing the beverage delivered in the cup. The apparatus is provided with a branch bypassing the pump. The operating cycle provides for three steps: a first pre-infusion step which uses the water at the water-supply system pressure through the by-pass, a second under-pressure infusion step which provides for the activation of the pump and a last post-infusion step which provides for the switching off of the pump and the delivery of water to reach the amount/weight parameters required.

Such systems are complex to manufacture, use and manage, in particular since the operation time can change due to the deposit of limescale in the circuit.

Object of the present invention is to suggest an apparatus and a relative operating method for preparing beverages that is easy to implement and that ensures a good quality of the final beverage.

### Summary of the invention

These and other objects are achieved by the present invention according to one or more of the aspects described herein.

In particular, the present invention concerns an apparatus and a method according to the independent claims. Preferred aspects are set forth in the dependent claims.

In particular, an aspect of the present invention concerns an apparatus for preparing a beverage, comprising: at least one infusion assembly; a hydraulic circuit adapted to connect the infusion assembly with an external water-supply system. The hydraulic circuit defines, for at least one infusion assembly, at least one first fluidic path to connect the infusion assembly to the external water-supply system, and a second fluidic path to connect the infusion assembly to the external water-supply system. The hydraulic circuit provides at least one pump and such at least one pump is arranged on the second fluidic path. The first fluidic path joins the second fluidic path downstream of the pump, to have a portion in common with the second fluidic path downstream of the pump, and the unidirectional-flow control element is arranged on the first path.

Thanks to this, the apparatus is able to provide high pressure water to the infusion assembly (by using the pump), or at lower pressure supplied by the external system without operating the pump. In particular, the present apparatus can simply carry out a pre-infusion step, and with low energy consumption, without operating the pump, by exploiting the water pressure supplied by the external system.

Preferably, the unidirectional-flow control element is a valve, preferably a non-return valve. According to an aspect of the present invention, the unidirectional-flow control element is a passively operating element.

Preferably, the unidirectional-flow control element is configured to allow water flow when the upstream pressure is greater than the downstream pressure, and to prevent water flow when the upstream pressure is less than the downstream pressure.

This way, the operation of the pump brings pressurized water downstream of the unidirectional-flow control element, which thus prevents water flow in a direction from downstream to upstream, thus closing the first fluidic path.

However, when the pump is not operative, the water entering the apparatus from the external source causes the unidirectional-flow control element to open, thus allowing water flow through the first fluidic path.

Each infusion assembly has, in a way known per se, a dedicated heating element: preferably, in the first and second circuits there are no other heating means to heat the water for the infusion assembly. Another advantage is that, as mentioned, the heating of the infusion water in the apparatus is carried out by devices localized in each infusion assembly. Thanks to this arrangement, the hydraulic circuits of the apparatus downstream of the infusion assemblies work "in a cold condition" in the supplying steps, thus decreasing or eliminating any limestone production.

According to the invention, the pump serves two or more infusion assemblies; preferably there is only one pump for all the infusion assemblies of the apparatus. For each pump serving two or more infusion assemblies, there is preferably one distribution element (or distribution valve) to which a duct starting from the pump arrives and from which ducts reaching the infusion assemblies extend. The ducts of the first fluidic path meet the ducts of the second fluid path downstream of the pump, thus constituting a by-pass of the latter. In an embodiment the apparatus comprises an electrovalve placed downstream of the pump and upstream of the junction point between the first and the second fluidic paths. Such electrovalve can be controlled by a control unit managing the apparatus operations.

In particular, according to a preferred aspect, during a pre-infusion step, the low pressure water (or anyhow at a pressure less than that supplied by the pump during the successive steps of preparing the beverage) coming from the external system opens the first path and reaches the respective infusion assembly. For the circuit concerned, the electrovalve is closed and the non-return valve is open.

Thanks to the presence of electrovalves between the pump and the junction point between the first and the second circuits, two coffees can be delivered from two different infusion assemblies and in two different ways. In other words, while an infusion assembly is carrying out a pre-infusion as described above, in the adjoining assembly the infusion and delivery of the beverage can be carried out, with the pump operating. In fact, in the first assembly the electrovalve downstream of the pump is closed, while in the second infusion assembly the electrovalve will be open to connect the pump (shared by the two assemblies) to the second infusion assembly and to deliver the desired beverage.

Preferably, the first path branches off from the second path upstream of the at least one pump, so as to bypass the pump.

Preferably, the hydraulic circuit comprises a volumetric dosing unit to dose the amount of water entering the infusion assembly.

Preferably, the volumetric dosing unit is arranged on the portion shared between the first and the second fluidic path downstream of the pump.

Preferably, the hydraulic circuit comprises a pressure regulator, preferably a pressure reducer, placed on the first path.

The pressure regulator is typically a pressure reducer, or anyhow a typically passive element adapted to regulate the pressure entering from the external system. Thus, according to a possible aspect, it is possible to carry out a pre-infusion by exploiting the pressure supplied by the external system, and by using two passive elements (the pressure regulator and the unidirectional-flow control element) to regulate the water pressure and to channel the water flow towards the infusion assembly, so that such pre-infusion step is carried out in a simple and energetically economic way.

A further aspect of the present invention further concerns a method for preparing a beverage, comprising the steps of: i) connecting an infusion assembly of an apparatus claimed herein to an external water-supply system; ii) opening the first fluidic path, while keeping the second fluidic path closed, so that the water flows from the external system to the infusion assembly; iii) operating the pump, to bring the water to the infusion assembly, while keeping the first path closed; the water pressure is greater with respect to step ii).

Preferably, the operation of the pump brings pressurized water downstream of the unidirectional-flow control element, so that to prevent the passage of fluid within the first path.

Preferably, the step ii) is a pre-infusion step of the beverage, and wherein the step iii) is a delivering step of the beverage.

Lastly, according to a preferred aspect, the duration of step ii) with respect to step iii) can be controlled by the closing and/or opening of an electrovalve placed downstream of the pump and upstream of the junction point between the first and the second fluidic paths, independently for each infusion assembly.

### Brief description of the drawings

With reference to the figures attached, exemplary and non-limiting embodiments of the present invention are now introduced, in which:
- figure 1 is a schematic view of an apparatus according to an embodiment of the present invention;
- figure 2 is a detailed view of figure 1, in which many elements were omitted for simplicity;
- figures 3 and 4 are views in which the operation of the apparatus, as shown in figure 2, is schematically shown.

### Method for implementing the invention

An apparatus 1 according to the present invention comprises at least one infusion assembly 2a, 2b.

There are two infusion assemblies in the embodiment shown. Embodiments, not shown, with a greater number of infusion assemblies, are however possible. According to the invention, the pump of the apparatus is shared by several infusion assemblies.

As known, the term infusion assembly (for example a machine for preparing espresso coffee) means a device adapted to receive an input liquid (water in the present invention) for preparing the beverage and to supply an output beverage prepared with such liquid by means of an infusion process.

An infusion assembly 2a, 2b is thus typically equipped with an infusion chamber, in which water meets a basic substance, typically powdered, for preparing a beverage and a nozzle or similar element to allow the delivery of the beverage. As known, for example in the machines for preparing espresso coffee, the infusion assembly, and in particular the infusion chamber, can comprise (or at least partly be constituted by) a filter-holder. A boiler or heater can be provided to heat the water. The infusion chamber can be configured, in a known way, to directly receive a substance, for example powdered, or to receive a container (capsule, pod, or similar element) containing such substance. As mentioned, the infusion chamber can be at least partly constituted by a filter-holder, which is manually connected by the bartender to the machine for preparing espresso coffee.

The apparatus 1 further comprises a hydraulic circuit 3 adapted to connect each infusion assembly 2a, 2b to an external water-supply system 100.

Typically, the hydraulic circuit 3 comprises a plurality of tubes or ducts 3a, and one or more water flow regulating and/or measuring elements 3b, 3c-3c", 3d-3d', 3e, 3f-3f'. Various water flow regulating and/or measuring elements are known in the art.

For example, in a possible embodiment, the hydraulic circuit 3 is equipped with a distributor valve 3b adapted to receive water from an inlet and to channel water towards one or more of the outlets connected to it. The valve 3, or distribution element, is further connected to a boiler for the production of steam 6, for supplying water to said boiler.

According to an aspect, the hydraulic circuit 3 comprises electrovalves 3c-3c' adapted to selectively allow and prevent the passage of water through the different ducts 3a of the hydraulic circuit 3. As stated above, the valve 3c, 3c' are positioned between the pump 4 and the junction point B, B' between the first and the second fluidic paths.

According to an aspect, the hydraulic circuit comprises manually operated valves 3d. In the embodiment shown, such manually operated valves 3d regulate the inflow of water into the infusion assembly 2a.

According to an aspect, the hydraulic circuit 3 comprises a pressure regulator 3e, preferably a pressure reducer, adapted to reduce to a predefined value the water pressure entering from the external system 100, as better discussed below.

According to an aspect, the hydraulic circuit 3 comprises a volumetric dosing unit 3f upstream of one (and preferably upstream of each) infusion assembly 2a, 2b.

In possible embodiments, the hydraulic circuit could be equipped with a combination of some of such elements, and in particular, hydraulic circuits having different combinations of the regulating and measuring elements 3e - 3f are possible.

The external system 100 is typically the urban water-supply system.

According to a possible aspect shown in the figures, the apparatus 1 (such as for example a machine for preparing espresso coffee) can comprise a boiler 6 for producing steam (typically connected to a respective steam-delivering devices known in the art and not shown in detail).

For at least one infusion assembly 2a, 2b, and preferably for each infusion assembly 2a, 2b, the circuit 3 is configured so that to provide a first fluidic path 31 and a second fluidic path 32.

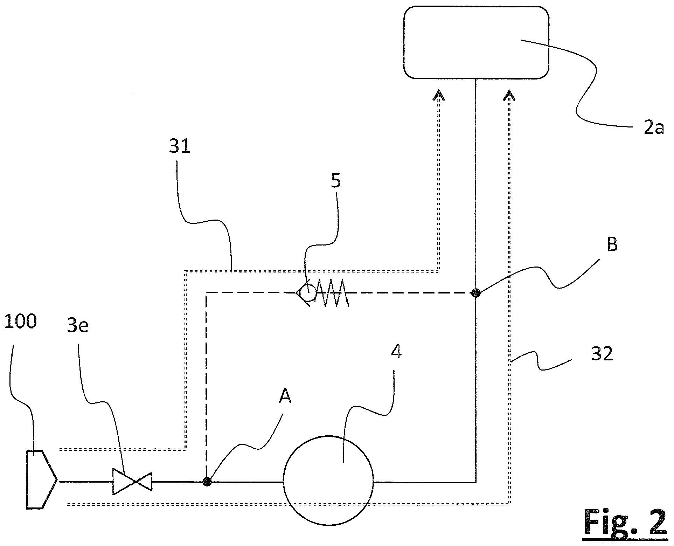

Such first and second fluidic paths 31, 32 are shown in detail in figure 2, with reference to the infusion assembly 2a. As better discussed below, although not explicitly denoted by numerical references, a first and a second fluidic path having the characteristics discussed herein are also provided for the second infusion assembly 2b.

Both the first and the second fluidic path 31, 32 (hereinafter also "first path" and "second path") are adapted to connect the infusion assembly 2a to the external system 100.

There is at least one pump 4, arranged on the second path 32, on the circuit 3.

The second path 32 thus allows to supply high pressure water (or anyhow at pressure greater than that supplied by the external system 100), while the first path 31 supplies water at the pressure supplied by the external system 100 (possibly modified by the pressure regulator 3e).

The first and second fluidic paths have at least one portion in common, placed downstream of the pump 4. The definition "downstream" refers to the path of water inside the second path 32, from the external system 100 to the infusion assembly 2a.

In particular, the first path 31 is connected to the external system 100 and joins the second path 32 at the junction point B, downstream of the pump 4. The length between point B and the infusion assembly 2a is thus shared between the first path 31 and the second path 32.

The first path 31 comprises a unidirectional-flow control element 5 (hereinafter also named "unidirectional element" 5).

The term unidirectional-flow control element means an element adapted to allow water flow in one direction, and to prevent water flow in the opposite direction. In other words, the unidirectional element allows the passage of water through the infusion assembly 2a, but prevents water from crossing the unidirectional element in the opposite direction, i.e. from the infusion assembly 3a towards the external system 100.

Preferably, the unidirectional element 5 is passive, i.e. can be operated mechanically. In particular, the state of the unidirectional element (i.e. the opening, to allow the passage of water, and the closing, to prevent the passage of water) can be controlled by a pressure difference, without requiring electric power, or another type of active control/command.

Preferably, in fact, when the pressure upstream of the unidirectional element 5 is greater than the pressure downstream of the unidirectional element 5, the unidirectional element "opens," i.e. allows the passage of water. Instead, when the pressure downstream of the unidirectional element 5 is greater than the upstream pressure, the unidirectional element "closes," i.e. preventing the passage of water. The definitions "upstream" and "downstream" refer to a water flow flowing from the external system 100 to the infusion assembly 2a.

The unidirectional element 5 thus allows the passage of water from upstream to downstream, i.e. prevents the passage of water from downstream to upstream.

This way, the operation of the pump 4 is sufficient to "close" the unidirectional element, i.e. to bring it to a condition in which it prevents the passage of fluid.

In fact, the operation of the pump 4 brings water to the junction point B. At this point, the water (in addition to continuing its path towards the infusion assembly 2a) also starts to run through the first path 31 in the opposite direction, until reaching the unidirectional element 5. As mentioned above, the pressure in the length of the hydraulic circuit comprised between the junction point B and the unidirectional element 5 causes the closing thereof, so that the water cannot cross the unidirectional element, thus preventing it from flowing towards the external system 100.

Preferably, the unidirectional element 5 is a non-return valve.

As mentioned above, the first path 31 is connected to the external system 100. According to a possible aspect, the first path 31 is directly connected to the external system 100. Preferably, however, as shown in the figures, the first and the second path 31, 32 have a further length in common, upstream of the pump 4.

More in detail, the portion between the external system 100 and the branching point A is shared between the first and second path 31, 32. At the branching point A, the first path 31 branches off from the second path 32, so that the second path 32 passes through the pump 4, while the first path 31 passes through the unidirectional element 5, thus avoiding the pump 4.

As described above, the first and the second path 31, 32 join at the junction point B.

Thus, in other words, the first path 31 preferably provides a bypass of the pump 4.

The first path 31 preferably also has the pressure regulator 3e mentioned above. According to an aspect, such pressure regulator 3e is placed upstream of the branching point A, i.e. in the portion shared between the first and second path 31, 32.

In other possible embodiments, the pressure regulator could be placed on the first path 31 only, for example between the branching point A and the junction point B.

In general, the pressure regulator 3e is preferably placed on the first path upstream of the junction point B.

The pressure regulator 3e, typically a pressure reducer, is typically a passive element known in the art and configured so that to regulate the pressure of the water entering the apparatus 1 to a predefined value. Such predefined value is typically adjustable, for example manually by a user.

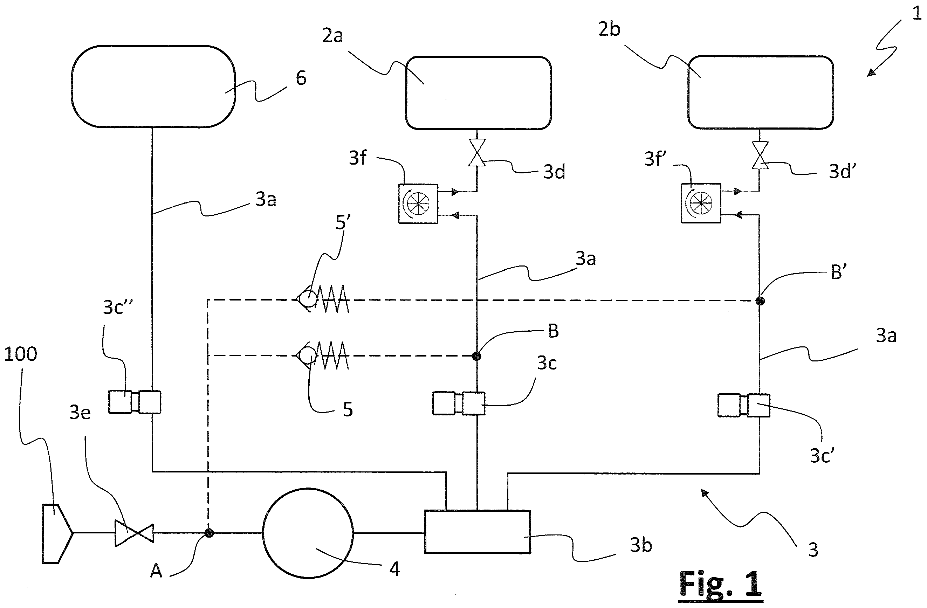

With reference to figure 1, as mentioned above, each infusion assembly 2a, 2b has a first and a second path.

In particular, in the embodiment of figure 1, the first path for the infusion assembly 2a meets the following elements: external system 100, pressure regulator 3e, branching point A, unidirectional element 5, junction point B, volumetric dosing unit 3f, manually operated valve 3d, infusion assembly 2a.

The second path for the infusion assembly meets the following elements: external system 100, pressure regulator 3e, branching point A, pump 4, distributor valve 4b, electrovalve 3c, junction point B, volumetric dosing unit 3f, manually operated valve 3d, infusion assembly 2a.

The first path for the infusion assembly 2b meets the following elements: external system 100, pressure regulator 3e, branching point A, unidirectional element 5', junction point B', volumetric dosing unit 3f, manually operated valve 3d', infusion assembly 2b.

The second path for the infusion assembly 2b meets the following elements: external system 100, pressure regulator 3e, branching point A, pump 4, distribution valve 3b, electrovalve 3c', junction point B', volumetric dosing unit 3f, manually operated valve 3d', infusion assembly 2b.

In a preferred embodiment, a further unidirectional element conveniently adjusted can be positioned between the volumetric dosing units 3f, 3f and the valves 3d, 3d', respectively, for the infusion assemblies 2a and 2b.

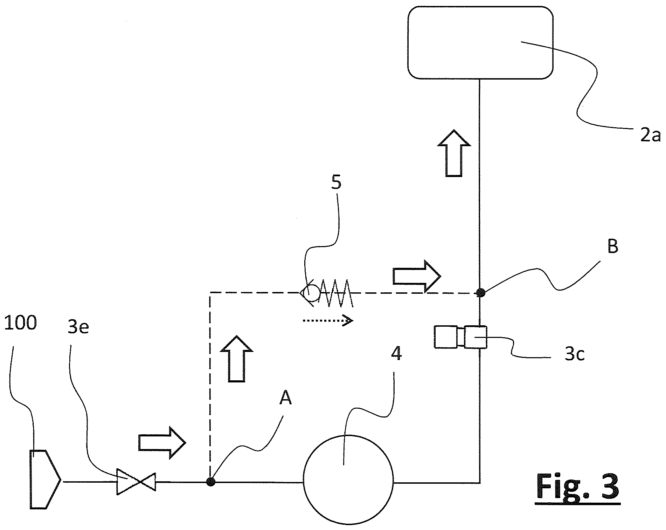

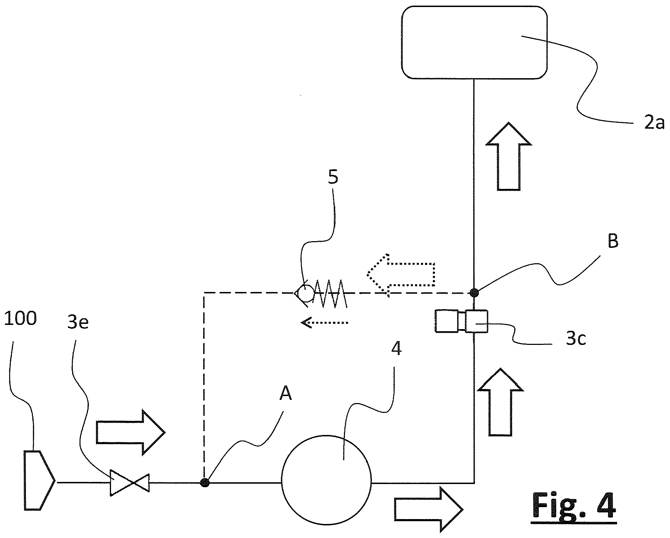

With reference to figures 3 and 4, the operation of the apparatus 1 is now described, with reference to the infusion assembly 2a. Such description is generally applied to any infusion assembly of the apparatus 1.

In use, in a first step, preferably a pre-infusion step, water is channeled to the infusion assembly 2a without delivering the beverage. Thus, in this step, water fills the infusion chamber and is at a lower pressure than in the successive delivering step. In this step, the pump 4 is not operated.

The water coming from the external system 100 (and preferably set at a predefined pressure by the pressure regulator 3e) passes through the first path 31, i.e. through the unidirectional element 5.

With reference to figure 3, the water branches off from the shared portion at the branching point A and arrives at the unidirectional element. The water pressure opens the unidirectional element 5 so that the water arrives at the junction point B.

From here, the water continues its path up to the infusion assembly 2a. An electrovalve 3c, or similar regulating and/or measuring element, can be placed on the second path 32 so that to prevent water from flowing from the junction point B towards the pump 4.

Preferably, the amount of water supplied to the infusion assembly 2a is monitored by the volumetric dosing unit 3f, so that to determine when to finish the pre-infusion step.

Successively, with particular reference to figure 4, the pump 4 is operated. If present, the electrovalve 3c (or similar regulating and/or measuring element) is opened. This way, the water flows through the second path 32 and is channeled at a greater pressure (with respect to the previous step) to the infusion assembly 2a.

As shown in figure 4 with a dotted arrow, initially the water pressurized by the pump 4 also flows through the length of the first path 31 comprised between the junction point B and the unidirectional element 5. As described above, the unidirectional element prevents the passage of water through the element itself in that direction. In particular, according to a preferred aspect, the water pressure causes the closing of the unidirectional element 5, thus preventing water flow through the first path 31.

This way, the water can reach the infusion assembly 2a only through the second path, pushed by the pump 4 so that to allow the delivery of a beverage. Preferably, when the volumetric dosing unit 3f has detected that the desired amount of water was supplied to the infusion assembly 2a, the operations of the pump 4 are stopped so that to finish delivering water to the infusion assembly 2a.

By operating the electrovalves 3c, 3c' positioned between the pump 4 and each junction point B, B' between the first and the second fluidic paths, it is possible to contemporaneously deliver two coffees from two different infusion assemblies 2a, 2b, for example. For example, while an infusion assembly 2a is carrying out a pre-infusion (ii), in the adjoining assembly 2b the infusion and delivery (iii) of the beverage can be carried out, with the pump 4 operating. The pump 4, as discussed above, can be connected to all of the infusion assemblies.

In other word, the beverage is prepared in an apparatus provided with a pump, at least two infusion assemblies and two electrovalves 3c, 3c' downstream of said pump on the paths of the circuits of said infusion assemblies 2a, 2b, according to a method comprising the steps of operating the pump 4; carrying out a pre-infusion step (ii) for a first infusion assembly 2a, while keeping the respective electrovalve 3c closed of the first path of the circuit of said first infusion assembly; and, at the same time, carrying out the infusion and delivery step (iii) for a second infusion assembly 2b by opening the electrovalve 3c' of the first fluidic path of said second delivering assembly.

## Claims

1. Apparatus (1) for preparing a beverage, comprising:
at least one infusion assembly (2a, 2b);
a hydraulic circuit (3) adapted to connect said at least one infusion assembly (2a, 2b) with an external water-supply system (100), said hydraulic circuit (3) defining, for at least one infusion assembly (2a, 2b), at least one first fluidic path (31) to connect said infusion assembly (2a, 2b) to said external water-supply system (100), and a second fluidic path (32) to connect said infusion assembly (2a, 2b) to said external water-supply system (100), said hydraulic circuit (3) being provided with at least one pump (4), said at least one pump (4) being arranged on said second fluidic path (32);
wherein said first fluidic path (31) joins said second fluidic path (32) downstream of said at least one pump (4), so as to have a portion in common with said second fluidic path (32) downstream of said at least one pump (4), and wherein a unidirectional-flow control element (5) is arranged on said first fluidic path (31);
**characterised in that**
only one pump (4) serves two or more infusion assemblies (2a, 2b) and each infusion assembly comprises a circuit having said first fluidic path and said second fluidic path.

2. Apparatus (1) according to claim 1, wherein said unidirectional-flow control element (5) is a non-return valve.

3. Apparatus (1) according to claim 1 or 2, wherein said unidirectional-flow control element (5) is a passively operating element.

4. Apparatus (1) according to one of the preceding claims, wherein said unidirectional-flow control element (5) is configured to allow water flow when the upstream pressure is greater than the downstream pressure, and to prevent water flow when the upstream pressure is less than the downstream pressure of said unidirectional-flow control element (5).

5. Apparatus (1) according to one of the preceding claims, wherein said first fluidic path (31) branches off from that second fluidic path (32) upstream of said at least one pump (4), so as to bypass said at least one pump (4).

6. Apparatus (1) according to one of the preceding claims, wherein said hydraulic circuit (3) comprises at least one volumetric dosing unit (3f, 3f') to dose the amount of water entering said at least one infusion assembly (2a, 2b).

7. Apparatus (1) according to one of the preceding claims, wherein said hydraulic circuit comprises a pressure regulator (3e) placed on said first fluidic path (31).

8. Apparatus (1) according to one of the preceding claims, wherein an electrovalve (3c) is positioned on a second fluidic path, downstream of the pump (4) and upstream of the junction point (B, B') between the first and the second fluidic paths, for each of said at least one infusion assembly.

9. Method for preparing a beverage, comprising the steps of:
i) connecting an infusion assembly (2a, 2b) of an apparatus (1) according to one or more of the preceding claims to an external water-supply system (100);
ii) opening said first fluidic path (31), while keeping said second fluidic path (32) closed, so that water flows from said external water-supply system (100) to said infusion assembly (2a, 2b);
iii) operating said at least one pump (4), to bring water to said infusion assembly (2a, 2b), while keeping said first fluidic path (31) closed, wherein the water pressure is greater with respect to said step ii).

10. Method according to claim 9 wherein, by operating the pump (4), pressurized water is brought downstream of the unidirectional-flow control element (5), so that the fluid is prevented from passing through the first fluidic path (31).

11. Method according to claim 9 or 10, wherein step ii) is a beverage pre-infusion step, and wherein step iii) is a beverage delivery step.

12. Method according to any one of claims 9 to 11, wherein said beverage is prepared in an apparatus according to claim 8 having at least two infusion assemblies and two electrovalves (3c, 3c') downstream of said pump on the paths of said infusion assemblies (2a, 2b), said method comprising the steps of
- operating said pump (4);
- for a first infusion assembly (2a), carrying out a pre-infusion step (ii) while keeping the respective electrovalve (3c) of the first path of the circuit of said first infusion assembly closed;
- for a second infusion assembly (2b), carrying out the infusion and delivery step (iii) by opening the electrovalve (3c') of the first fluidic path of said second delivering assembly.

## Patentansprüche

1. Vorrichtung (1) zum Zubereiten eines Getränks, aufweisend:
mindestens eine Aufgussanordnung (2a, 2b);
einen hydraulischen Kreislauf (3), der geeignet ist, die mindestens eine Aufgussanordnung (2a, 2b) mit einem externen Wasserversorgungssystem (100) zu verbinden, wobei der hydraulische Kreislauf (3) für mindestens eine Aufgussanordnung (2a, 2b) mindestens einen ersten Fluidweg (31) zum Verbinden der Aufgussanordnung (2a, 2b) mit dem externen Wasserversorgungssystem (100) und einen zweiten Fluidweg (32) zum Verbinden der Aufgussanordnung (2a, 2b) mit dem externen Wasserversorgungssystem (100) definiert, wobei der hydraulische Kreislauf (3) mit mindestens einer Pumpe (4) versehen ist, wobei die mindestens eine Pumpe (4) auf dem zweiten Fluidweg (32) angeordnet ist;
wobei der erste Fluidweg (31) stromabwärts von der mindestens einen Pumpe (4) in den zweiten Fluidweg (32) mündet, um einen Abschnitt mit dem zweiten Fluidweg (32) stromabwärts von der mindestens einen Pumpe (4) gemeinsam zu haben und wobei ein unidirektionales Strömungssteuerelement (5) auf dem ersten Fluidweg (31) angeordnet ist;
**dadurch gekennzeichnet, dass**
nur eine Pumpe (4) zwei oder mehr Aufgussanordnungen (2a, 2b) versorgt und jede Aufgussanordnung einen Kreislauf mit dem ersten Fluidweg und dem zweiten Fluidweg aufweist.

2. Vorrichtung (1) nach Anspruch 1, wobei das unidirektionale Strömungssteuerelement ist (5) ein Rückschlagventil ist.

3. Vorrichtung (1) nach Anspruch 1 oder 2, wobei das unidirektionale Strömungssteuerelement (5) ein passiv arbeitendes Element ist.

4. Vorrichtung (1) nach einem der vorhergehenden Ansprüche, wobei das unidirektionale Strömungssteuerelement (5) so konfiguriert ist, dass es einen Wasserfluss zulässt, wenn der stromaufwärtige Druck größer als der stromabwärtige Druck ist, und einen Wasserfluss verhindert, wenn der stromaufwärtige Druck geringer als der stromabwärtige Druck des unidirektionalen Strömungssteuerelements (5) ist.

5. Vorrichtung (1) nach einem der vorangehenden Ansprüche, wobei der erste Fluidweg (31) von dem zweiten Fluidweg (32) stromaufwärts der mindestens einen Pumpe (4) abzweigt, um die mindestens eine Pumpe (4) zu umgehen.

6. Vorrichtung (1) nach einem der vorhergehenden Ansprüche, wobei der hydraulische Kreislauf (3) mindestens eine volumetrische Dosiereinheit (3f, 3f) zum Dosieren der in die mindestens eine Aufgussanordnung (2a, 2b) eintretenden Wassermenge aufweist.

7. Vorrichtung (1) nach einem der vorangehenden Ansprüche, wobei der hydraulische Kreislauf einen Druckregler (3e) aufweist, der auf dem ersten Fluidweg (31) angeordnet ist.

8. Vorrichtung (1) nach einem der vorangehenden Ansprüche, wobei ein Elektroventil (3c) auf einem zweiten Fluidweg stromabwärts der Pumpe (4) und stromaufwärts des Verbindungspunkts (B, B') zwischen dem ersten und dem zweite Fluidweg für jede der mindestens einen Aufgussanordnung angeordnet ist.

9. Verfahren zum Zubereiten eines Getränks, umfassend die Schritte:
i) Verbinden einer Aufgussanordnung (2a, 2b) einer Vorrichtung (1) nach einem oder mehreren der vorhergehenden Ansprüche mit einem externen Wasserversorgungssystem (100);
ii) Öffnen des ersten Fluidwegs (31), während der zweite Fluidweg (32) geschlossen gehalten wird, so dass Wasser von dem externen Wasserversorgungssystem (100) zu der Aufgussanordnung (2a, 2b) fließt;
iii) Betreiben der mindestens einen Pumpe (4), um Wasser zu der Aufgussanordnung (2a, 2b) zu bringen, während der erste Fluidweg (31) geschlossen gehalten wird, wobei der Wasserdruck in Bezug auf Schritt ii) größer ist.

10. Verfahren nach Anspruch 9, wobei durch Betreiben der Pumpe (4) unter Druck stehendes Wasser stromabwärts des unidirektionalen Strömungssteuerelements (5) gebracht wird, so dass das Fluid daran gehindert wird, durch den ersten Fluidweg (31) zu strömen.

11. Verfahren nach Anspruch 9 oder 10, wobei der Schritt ii) ein Getränkevoraufgussschritt ist und wobei der Schritt iii) ein Getränkeabgabeschritt ist.

12. Verfahren nach einem der Ansprüche 9 bis 11, wobei das Getränk in einer Vorrichtung nach Anspruch 8 zubereitet wird, die mindestens zwei Aufgussanordnungen und zwei Elektroventile (3c, 3c') stromabwärts der Pumpe auf den Wegen der Aufgussanordnungen (2a, 2b) aufweist, wobei das Verfahren die folgenden Schritte umfasst:
- Betreiben der Pumpe (4);
- für eine erste Aufgussanordnung (2a), Ausführen eines Voraufgussschritts (ii) während das entsprechende Elektroventil (3c) des ersten Weges des Kreislaufs der ersten Aufgussanordnung geschlossen gehalten wird;
- für eine zweite Aufgussanordnung (2b), Ausführen des Aufguss- und Abgabeschritts (iii) durch Öffnen des Elektroventils (3c') des ersten Fluidwegs der zweiten Abgabeanordnung.

## Revendications

1. Appareil (1) pour préparer une boisson, comprenant :
au moins un ensemble d'infusion (2a, 2b) ;
un circuit hydraulique (3) adapté pour connecter ledit au moins un ensemble d'infusion (2a, 2b) avec un système d'alimentation en eau externe (100), ledit circuit hydraulique (3) définissant, pour au moins un ensemble d'infusion (2a, 2b), au moins un premier chemin fluidique (31) pour connecter ledit ensemble d'infusion (2a, 2b), audit système d'alimentation en eau externe (100), et un second chemin fluidique (32) pour connecter ledit ensemble d'infusion (2a, 2b) audit système d'alimentation en eau externe (100), ledit circuit hydraulique (3) étant pourvu d'au moins une pompe (4), ladite au moins une pompe (4) étant disposée sur ledit second chemin fluidique (32) ;
dans lequel ledit premier chemin fluidique (31) rejoint ledit second chemin fluidique (32) en aval de ladite au moins une pompe (4), de manière à avoir une partie en commun avec ledit second chemin fluidique (32) en aval de ladite au moins une pompe (4), et dans lequel un élément de commande d'écoulement unidirectionnel (5) est disposé sur ledit premier chemin fluidique (31) ;
**caractérisé en ce que**
une seule pompe (4) dessert deux ou plusieurs ensembles d'infusion (2a, 2b) et chaque ensemble d'infusion comprend un circuit ayant ledit premier chemin fluidique et ledit second chemin fluidique.

2. Appareil (1) selon la revendication 1, dans lequel ledit élément de commande d'écoulement unidirectionnel (5) est une vanne anti-retour.

3. Appareil (1) selon la revendication 1 ou 2, dans lequel ledit élément de commande d'écoulement unidirectionnel (5) est un élément de fonctionnement passif.

4. Appareil (1) selon l'une des revendications précédentes, dans lequel ledit élément de commande d'écoulement unidirectionnel (5) est configuré pour permettre l'écoulement de l'eau lorsque la pression amont est supérieure à la pression aval, et pour empêcher l'écoulement de l'eau lorsque la pression amont est inférieure à la pression aval dudit élément de commande d'écoulement unidirectionnel (5).

5. Appareil (1) selon l'une des revendications précédentes, dans lequel ledit premier chemin fluidique (31) se sépare de ce second chemin fluidique (32) en amont de ladite au moins une pompe (4), de manière à contourner ladite au moins une pompe (4).

6. Appareil (1) selon l'une des revendications précédentes, dans lequel ledit circuit hydraulique (3) comprend au moins une unité de dosage volumétrique (3f, 3f') pour doser la quantité d'eau entrant dans ledit au moins un ensemble d'infusion (2a, 2b).

7. Appareil (1) selon l'une des revendications précédentes, dans lequel ledit circuit hydraulique comprend un régulateur de pression (3e) placé sur ledit premier chemin fluidique (31).

8. Appareil (1) selon l'une des revendications précédentes, dans lequel une électrovanne (3c) est placée sur un second chemin fluidique, en aval de la pompe (4) et en amont du point de jonction (B, B') entre le premier et le second chemin fluidique, pour chacun desdits au moins un ensemble d'infusion.

9. Procédé de préparation d'une boisson, comprenant les étapes consistant à :
i) connecter un ensemble d'infusion (2a, 2b) d'un appareil (1) selon une ou plusieurs des revendications précédentes à un système d'alimentation en eau externe (100) ;
ii) ouvrir ledit premier chemin fluidique (31), tout en maintenant fermé ledit second chemin fluidique (32), de sorte que l'eau s'écoule dudit système d'alimentation en eau externe (100) vers ledit ensemble d'infusion (2a, 2b);
iii) faire fonctionner ladite au moins une pompe (4), pour amener de l'eau audit ensemble d'infusion (2a, 2b), tout en maintenant ledit premier chemin fluidique (31) fermé, dans lequel la pression de l'eau est supérieure par rapport à ladite étape ii).

10. Procédé selon la revendication 9, dans lequel, en actionnant la pompe (4), l'eau sous pression est amenée en aval de l'élément de commande d'écoulement unidirectionnel (5), de sorte que le fluide est empêché de passer par le premier chemin fluidique (31).

11. Procédé selon la revendication 9 ou 10, dans lequel l'étape ii) est une étape de pré-infusion de boisson, et dans lequel l'étape iii) est une étape de distribution de boisson.

12. Procédé selon l'une quelconque des revendications 9 à 11, dans lequel ladite boisson est préparée dans un appareil selon la revendication 8 ayant au moins deux ensembles d'infusion et deux électrovannes (3c, 3c') en aval de ladite pompe sur les trajets desdits ensembles d'infusion (2a, 2b), ledit procédé comprenant les étapes suivantes consistant à
- faire fonctionner ladite pompe (4) ;
- pour un premier ensemble d'infusion (2a), effectuer une étape de pré-infusion (ii) tout en maintenant fermée l'électrovanne respective (3c) du premier chemin du circuit dudit premier ensemble d'infusion clos,
- pour un second ensemble d'infusion (2b), effectuer l'étape d'infusion et de distribution (iii) en ouvrant l'électrovanne (3c') du premier chemin fluidique dudit second ensemble de distribution.
